# NEUE EUROPÄISCHE PATENTSCHRIFT

(11) **EP 1 510 688 B2**
(45) Veröffentlichungstag und Bekanntmachung des Hinweises auf die Entscheidung über den Einspruch: **05.10.2011**
(45) Hinweis auf die Patenterteilung: 26.03.2008
(21) Anmeldenummer: 03019864.2
(22) Anmeldetag: 01.09.2003
(51) Int. Cl.: F02M 37/22, F02M 31/125, B01D 35/18

(54) **Heizeinrichtung für ein zu beheizendes Medium**
Heating device for a medium to be heated
Dispositif de chauffage pour un milieu à chauffer

(43) Veröffentlichungstag der Anmeldung: 02.03.2005
(73) Patentinhaber: DBK David + Baader GmbH, 76870 Kandel (DE)
(72) Erfinder: Gschwind, Thomas, 67098 Bad Dürkheim (DE); Kühn, Alexander, 76131 Karlsruhe / Baden (DE); Proner, Mathias, 76139 Karlsruhe / Baden (DE)
(74) Vertreter: Polte, Willi

(56) Entgegenhaltungen:
- EP-A- 0 642 293
- EP-A- 0 657 199
- EP-A- 1 158 158
- WO-A2-01/92714
- US-A- 4 713 524

## Beschreibung

Die Erfindung betrifft eine Heizeinrichtung für ein gasförmiges oder flüssiges zu beheizendes Medium, vorzugsweise Dieselkraftstoff, mit zwei in einem Gehäuse angeordneten, der Warmeübertragung dienenden Kontaktplatten zwischen denen zumindest ein scheibenförmiges Heizelement angeordnet und in Anlage an beide Kontaktplatten gehalten ist, wobei die erste und die zweite Kontaktplatte mit jeweils zumindest einem Durchbruch versehen sind, und das Gehäuse zumindest einen Haltestift aufweist, der die Durchbrüche der ersten und der zweiten Kontaktplatte in einer Aufsteckrichtung durchdringt.

Eine derartige Heizeinrichtung ist aus der EP 1 158 158 A1 bekannt

Die EP 0 162 939 B1 zeigt eine solche Heizeinrichtung, die in einen Gehäuseteil eines Kraftstofffilters integriert ist. Diese Heizeinrichtung zeigt zwei Kontaktplatten und mehrere Heizelemente. Überdies ist eine Federeinrichtung vorgesehen, die die Kontaktplatten und Heizelemente in gegenseitiger Anlage hält. In Sandwichbauweise übereinandergelegt wird die gesamte Anordnung dann gegenüber dem Gehäuseteil mehrfach verschraubt.

Solche Heizeinrichtungen haben sich in vielerlei Anwendungen bewährt. Getrieben von den stetigen Weiterentwicklungen im Automobilbau werden dennoch immer höhere Anforderungen an einzelne Komponenten wie z.B. solche Heizeinrichtungen gestellt, besonders in Hinsicht auf Platzverbrauch, Montagefähigkeit und schließlich auch auf den Anschaffungspreis.

Der Erfindung liegt dadurch die Aufgabe zugrunde, eine Heizeinrichtung der eingangs erwähnten Art zu verbessern, und den Platzverbrauch sowie den Montageaufwand zu verringern, als auch die Herstellungskosten zu reduzieren.

Die Aufgabe wird durch eine Heizeinrichtung nach Anspruch 1 gelöst, bei der die zweite Kontaktplatte im Bereich des Durchbruchs fest mit der Kontaktplatte verbundene Federabschnitte aufweist, die durch Montieren der zweiten Kontaktplatte verformbar sind und die sich bei montierter Kontaktplatte entgegender Aufsteckrichtung an dem Haltestift abstützen um den Kontaktdruck zwischen dem Heizelement und den Kontaktplatten zu erzeugen. So erfüllt die zweite Kontaktplatte zeitgleich die Funktion der Federeinrichtung, auf die dann verzichtet werden kann. Der eingesparte Einbauraum wird nicht anderweitig benötigt und steht anderen Anwendungen zur Verfügung. Das reduziert den Platzverbrauch der gesamten Anordnung erheblich. Indem sich die Federabschnitte beim Aufstecken an den Haltestiften des Gehäuses verklemmen und verkanten, ist die zweite Kontaktplatte mit dem Gehäuse fest verbunden ohne dass eine weitere Verbindung z.B. eine Schraubverbindung erforderlich ist. Diese in der Erfindung gezeigte Klemm-/Schneidverbindung bringt eine Reihe von Vorteilen mit sich: Zunächst erspart sich der Hersteller einen weiteren Montageschritt (z.B. Verschrauben der zweiten Kontaktplatte) und kann die Heizeinrichtung schneller zusammenbauen. Ebenso wird das Material der Befestigungsschraube eingespart und die Anordnung wird leichter. Auch muss kein Werkzeug z.B. zur Verschraubung eingesetzt werden. Die erfindungsgemäße Heizeinrichtung erfordert demnach einen geringen Materialeinsatz und Fertigungsaufwand und lässt sich kostengünstig herstellen.

Die Federabschnitte sind jeweils als eine Federzunge ausgebildet. Die Federzunge ist direkt aus dem Material der zweiten Kontaktplatte freigeschnitten und ist dabei verhältnismäßig flexibel. Die Flexibilität der Federzunge erweist sich zudem als besonders günstig falls es infolge thermoelastischer Effekte zu relativen Verformungen der zweite Kontaktplatte gegenüber den Haltestiften kommt. Sie kann die Verformungen kompensieren ohne dass der Kontaktdruck zwischen den Kontaktplatten und dem Heizelement verloren geht.

Es ist außerdem vorteilhaft, wenn der Haltestift aus weicherem Material gefertigt ist als der Federabschnitt. Unter Klemmung drücken sich die Federabschnitte in den Haltestift geringfügig ein, wodurch sich der Federabschnitt besser am Haltestift abstützen kann. So wird das Risiko reduziert, dass der Federabschnitt am Haltestift abrutscht und der Kontaktdruck verloren geht.

Es kann sich vorteilhaft erweisen, wenn der Federabschnitt mit zumindest einem Wiederhaken oder zumindest einer scharfkantigen Schneide versehen ist. Unter der Rückstellkraft des Federabschnitts verkanten die Schneiden am Haltestift und schneiden sich in das Material des Haltestifts ein. Unter Krafteinwirkung entgegen der Aufsteckrichtung ist eine solche Klemm- / Schneidfixierung in der Regel nicht zerstörungsfrei lösbar. Bei einer solchen Anordnung bleibt der Kontaktdruck stets erhalten.

Zudem stellt es sich als hilfreich heraus, wenn im Bereich eines Durchbruchs der zweiten Kontaktplatte zumindest zwei Federzungen angeordnet sind, wobei die Federzungen vorzugsweise gleichmäßig um den Haltestift verteilt sind. Zwei Federzungen, die sich auf gegenüberliegenden Seiten des Haltestifts befinden, üben im der Summe der Vektoren eine Kraft auf den Haltestift aus, die unter gleichmäßiger Belastung entgegen der Aufsteckrichtung wirkt. Dadurch wird der Haltestift nicht quer zur Aufsteckrichtung belastet und die Lebensdauer erhöht sich wesentlich. Zudem sinkt die Gefahr, dass der Haltestift dem Druck des Federabschnitts nachgibt und sich die Klemmfixierung löst.

Zudem kann es den Kontaktdruck zwischen den Kontaktplatten und dem Heizelement weiter erhöhen, wenn die zweite Kontaktplatte in Aufsteckrichtung zumindest einen aus der Plattenebene vorstehenden Abschnitt aufweist, an dem das Heizelement anliegt, wobei die Anlagefläche des vorstehenden Abschnitts in etwa der Anlagefläche des Heizelements entspricht.

Für den Einbau in die meisten gängigen Einrichtungen und Gehäuseteile erweist es sich vorteilhaft, wenn die Kontaktplatten im Wesentlichen kreis- bzw. ringförmig sind und im Wesentlichen parallel zueinander angeordnet sind.

Bevorzugt bei kreis- bzw. ringförmigen Kontaktplatten ist zumindest eine der Kontaktplatten mit mehreren Durchbrüchen versehen, wobei die Durchbrüche im Wesentlichen in einer Kreisform angeordnet sein können. Dadurch können die Kontaktplatten besonders gleichmäßig abgestützt werden und parallel gehalten werden.

Alternativ hierzu können die Kontaktplatten auch rechteckförmig ausgebildet sein um eine möglichst kompakte und leistungsstarke Bauform zu erzielen. So lassen sich mehrere z.B. rechteckige Heizelemente im Zwischenraum beider Kontaktplatten so anordnen um diesen nahezu vollständig auszufüllen.

In einer besonders bevorzugten Ausführungsform sind beide Kontaktplatten jeweils mit mehreren Durchbrüchen versehen, die von jeweils einem Haltestift durchdrungen werden, wobei die Durchbrüche jeweils auf einem Kreis um den Mittelpunkt der Anlagefläche des nächstgelegenen Heizelements angeordnet sind. An dieser Anlagefläche wird der Kontaktdruck auf das nächstgelegene Heizelement übertragen. Auf dem Kreis um den Mittelpunkt dieser Anlagefläche sind alle Punkte gleich weit vom Mittelpunkt entfernt. Die zweite Kontaktplatte wird dadurch gleichmäßig abgestützt, so dass die Kontaktflächen des Heizelements gerade an den Anlageflächen der Kontaktplatten anliegen. So wird der Wärmeübergang zwischen dem Heizelement und den Kontaktplatten verbessert.

Um thermoelastische Verformungen der zweiten Kontaktplatte in Relation zu den Haltestiften besser kompensieren zu können erweist es sich als vorteilhaft, wenn die Federzungen am Durchbruch der zweiten Kontaktplatte im Wesentlichen tangential zu einem Kreis um den Mittelpunkt der Auflagefläche des nächstgelegenen Heizelements ausgerichtet sind. Dehnt sich die zweite Kontaktplatte im Vergleich zum Gehäuse überproportional aus, so wächst der Durchmesser des Verbindungskreises aller Durchbrüche. Die Federabschnitte, die sich mit den Haltestiften im Eingriff befinden, verbiegen sich unter diesem Einfluss geringfügig, und zwar gleichmäßig zum Mittelpunkt des Kreises hin, ohne dass der Kontaktdruck verloren geht.

Es erweist sich zudem als günstig, wenn der Haltestift dem Heizelement benachbart angeordnet ist und das Heizelement dadurch quer zur Aufsteckrichtung fixiert. So kann das Heizelement ständig in Position gehalten werden, was z.B. die Montage erheblich vereinfacht. Auch verhindert dies ein Verschieben des Heizelements, falls z.B. infolge starker Erschütterung der Kontaktdruck kurzzeitig verringert wird bzw. verloren geht, und reduziert so die Versagenswahrscheinlichkeit der Heizeinrichtung.

Um dieser Gefahr vorzubeugen kann es sich auch als hilfreich erweisen das Heizelement mit zumindest einer Halteöffnung zu versehen, die der Haltestift durchdringt.

Jedes Heizelement ist sicher in einer Richtung quer zur Aufsteckrichtung positioniert, wenn im Umfangsbereich des Heizelements zumindest drei Haltestifte vorgesehen sind, die vorzugsweise gleichmäßig entlang des Umfangs des Heizelements angeordnet sind. Auch lassen sich dadurch die Kontaktflächen des Heizelements und die Anlageflächen der Kontaktplatten gleichmäßig und gerade in Anlage halten.

Zudem erleichtert es das Herstellungsverfahren erheblich, wenn das Gehäuse aus Kunststoff hergestellt ist. Kunststoffe sind in der Regel preisgünstig in der Anschaffung, überdies gestaltet sich die Formgebung für Kunststoffprodukte verhältnismäßig einfach. Kunststoffe wirken in der Regel zudem als Isolator für Wärme und Strom. So kann z.B. ungewollter Wärmeverlust über das Gehäuse verhindert werden.

In einer besonders bevorzugten Gestaltungsform ist der Haltestift im Wesentlichen zylindrisch und dessen Durchmesser beträgt in etwa die zweifache Dicke des Heizelements.

Ein Federabschnitt kann sich besonders gut an einem Haltestift abstützen, wenn dabei die Breite der Federabschnitte vorzugsweise dem Durchmesser des Haltestifts entspricht.

Die Federeigenschaften des Federabschnitts sind besonders günstig, wenn die freigeschnittene Länge der Federabschnitte bevorzugt das Ein- bis Zweifache, vorzugsweise das Eineinhalbfache des Haltestiftdurchmessers beträgt.

Es ist von Vorteil für das Herstellungsverfahren, wenn die Durchbrüche der zweiten Kontaktplatte im Wesentlichen ein H-Profil aufweisen. Dieses Profil lässt sich mit einer geeigneten Stanzvorrichtung leicht anbringen, wobei die Federabschnitte implizit mit freigeschnitten werden.

Wenn die Haltestifte auf zylindrischen Sockeln sitzen, die bevorzugt den zwei- bis dreifachen Haltestiftdurchmesser aufweisen, können diese Sockel der ersten Kontaktplatte eine hervorragende Anlagefläche bieten. Der Kraftverlauf durch die Anordnung ist so besonders günstig, da sich die zweite Kontaktplatte am Haltestift abstützt, diesen Kontaktdruck über das Heizelement auf die erste Kontaktplatte überträgt, und die erste Kontaktplatte wiederum die Kraft auf die Sockel am Fuß der Haltestifte weitergibt. Der Kraftfluss durch die Anordnung verläuft im Wesentlichen senkrecht. Also verringert sich die Wahrscheinlichkeit, dass sich eine der Kontaktplatten z.B. infolge eines sehr hohen Kontaktdrucks verformt, da nur geringe bis keine Querkräfte vorkommen.

Vorteilhaft erweist es sich zudem, wenn an den Haltestiften Abschnitte vorgesehen sind, die sowohl die erste Kontaktplatte als auch das Heizelement ausrichten. So können die Positionen der einzelnen Bauteile mit wenigen Anlagepunkten bzw. Zentrierabschnitten relativ zueinander gesichert werden.

Es verringert das Risiko, dass ein Federabschnitt an einem Haltestift abrutscht, wenn die Federabschnitte an dem zum Abstützen am Haltestift vorgesehen Ende eine Kontur aufweisen, die im Wesentlichen der Kontur des Haltestifts an der Abstützfläche entspricht.

Nachfolgend werden Aufbau und Funktionsweise einer erfindungsgemäßen Heizeinrichtung anhand der Figuren erläutert. Es zeigen:
Fig.1: Prinzipdarstellung der Heizeinrichtung in der Gesamtansicht.
Fig.2: Gesamtansicht der Heizeinrichtung im Schnitt durch die Linie A-A aus Figur 1 Fig.3: Draufsicht auf die Heizeinrichtung in der Aufsteckrichtung.
Fig.4: Draufsicht auf einen Durchbruch der zweiten Kontaktplatte in der Aufsteckrichtung im montierten Zustand (vergrößerte Darstellung).
Fig.5: Schnitt durch die Linie B-B aus Figur 4 in kaltem und warmem Zustand der zweiten Kontaktplatte.

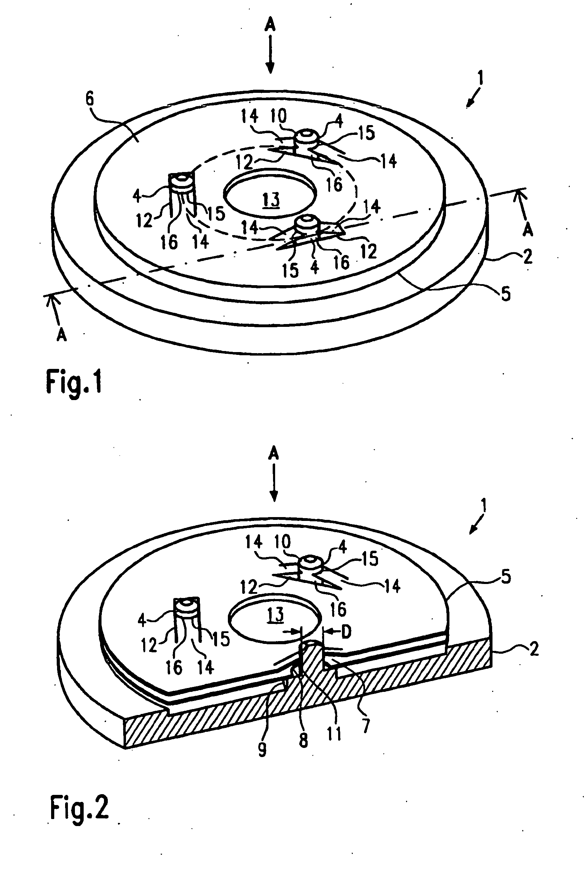

Figur 1 zeigt das Prinzip einer Heizeinrichtung 1 mit einem Gehäuse 2 mit kreisförmiger Bodenfläche 3 aus Kunststoff und drei Haltestiften 4, die senkrecht von der Bodenfläche abstehen. In Figur 2 ist zu sehen, wie auf die zylindrischen Haltestifte 4 des Gehäuses 2 eine kreisförmige erste Kontaktplatte 5 und eine kreisförmige zweite Kontaktplatte 6 aufgesteckt sind, die im Zwischenraum ein Heizelement 7 einklemmen.
Die Haltestifte 4 sitzen jeweils auf einem zylindrischen Sockel 9 mit in etwa dem dreifachen Durchmesser D des Haltestifts 4. Die Sockel 9 dienen der ersten Kontaktplatte 5 als Anschlagsfläche. In der gezeigten Ausführungsform sind die Sockel 9 in etwa so hoch wie ein Durchmesser eines Haltestifts 4. Jeder Haltestift 4 ist selbst oben leicht angeschrägt und zeigt an der Spitze die Form eines Kegelstumpfs 10, der sich von dem vollen Durchmesser des Haltestifts 4 in einem Winkel von etwa 45° auf etwa den halben Durchmesser verjüngt. Am Sockel 9 jedes Haltestifts 4 ist ein Zentrierabschnitt 11 vorgesehen, der die erste Kontaktplatte 5 in ihre vorgesehene Position drängt. Die Haltestifte 4 sowie die Sockel 9 und die Zentrierabschnitte 11 sind einstückig am Gehäuse angeformt. Das Gehäuse besteht vorzugsweise aus Kunststoff.

Beide Kontaktplatten 5,6 sind aus einem Material mit guten Strom- und Wärmeleiteigenschaften, z.B. Aluminium hergestellt. Jede Platte zeigt jeweils drei Durchbrüche, die von den Haltestiften 4 durchdrungen werden.

Die erste, untere Kontaktplatte 5 hat drei runde Durchbrüche 8.

In der gezeigten Ausführungsform ist das Heizelement 7 eine kreisrunde Scheibe und ist mittig zwischen den beiden Kontaktplatten 5 und 6 angeordnet. Das Heizelement 7 liegt dabei direkt auf der Oberfläche der unteren, ersten Kontaktplatte 5. Die Dicke des Heizelements 7 bestimmt den Abstand der ersten und zweiten Kontaktplatten 5,6 und beträgt etwa den halben Durchmesser eines Haltestifts.

Die zweite Kontaktplatte 6 ist von oben in Aufsteckrichtung A auf die Haltestifte 4 aufgesteckt. Ein in Aufsteckrichtung aus der Plattenebene vorstehender Abschnitt 13 liegt an dem Heizelement 7 an. Die Lage, Form und Größe des vorstehenden Abschnitts 13 ist dem Heizelement 7 angepasst und liegt mittig innerhalb der zweiten Kontaktplatte 6.

Im montierten Zustand durchdringt jeder Haltestift 4 genau einen Durchbruch 8,12 genau einer Kontaktplatte 5,6, wobei die Durchbrüche jeweils genau übereinander liegen. Die Positionen der Durchbrüche 8,12 und der Haltestifte 4 sind also aufeinander abgestimmt.
Die Lage und Anordnung der Durchbrüche 8,12 beider Kontaktplatten 5,6 sowie der Haltestifte 4 wird von der Position des Heizelements 7 bestimmt:

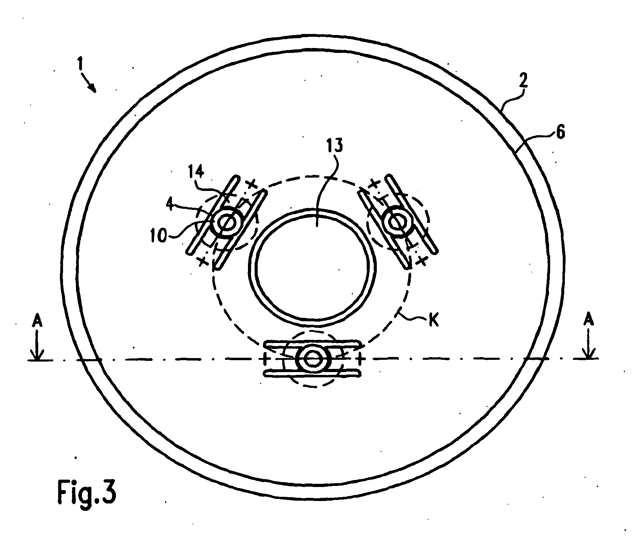

In einer Draufsicht auf die Anordnung in Aufsteckrichtung A sind die Plattendurchbrüche 8,12 und Haltestifte 4 jeweils kreisförmig um ein Heizelement 7 angeordnet und gleichmäßig auf den Umfang eines imaginären Kreises K verteilt. Den Mittelpunkt dieses Kreises K bildet der Mittelpunkt der Anlagefläche der zweiten Kontaktplatte 6 an die entsprechende Kontaktfläche des Heizelements 7, hier also der Mittelpunkt des vorstehenden Abschnitts 13. In der gezeigten Anordnung sind auf einer Kontaktplatte 5,6 jeweils drei Durchbrüche 8,12 pro Heizelement 7 vorgesehen, die von drei Haltestiften 4 durchdrungen werden, die jeweils um 120° versetzt sind. Figur 3 zeigt die Anordnung der Durchbrüche und Haltestifte in der Draufsicht in Aufsteckrichtung.

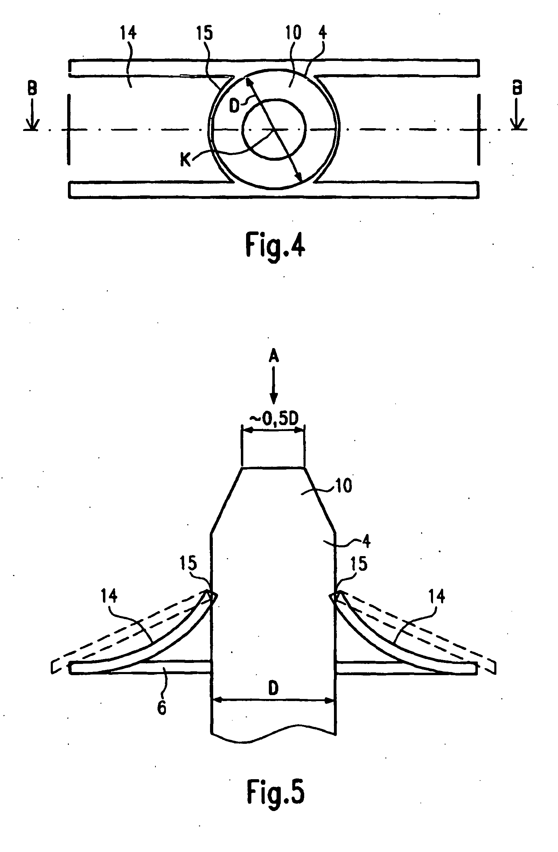

In Figur 4 ist ein Durchbruch 12 der zweiten Kontaktplatte 6 ebenfalls in der Draufsicht in Aufsteckrichtung A vergrößert dargestellt. Die Durchbrüche 12 der zweiten Kontaktplatte 6 sind speziell geformt und weisen ein H-Profil auf: Aus dem Material der zweiten Kontaktplatte sind zwei gegenüberliegende Federnasen 14 freigeschnitten mit jeweils der Länge von 1-2 Haltestiftdurchmessern. Die Federnasen 14 erstrecken sich jeweils im Wesentlichen tangential zu dem Umfang des imaginären Kreises K, wobei die Breite B dieser Federnasen 14 in etwa einen Haltestiftdurchmesser D beträgt. Die sich gegenüberliegenden, freistehenden Enden 15 der Haltestifte 4 sind scharfkantig und konkav geformt um zwischen sich jeweils einen Haltestift 4 aufzunehmen und sich optimal an diesem abzustützen. Der sich im Ruhezustand ergebende Abstand zwischen den freistehenden Enden 15 der Federnasen 14 ist groß genug um die Spitze 10 eines Haltestifts 4 zwischen sich aufzunehmen, aber kleiner als der Durchmesser D des Haltestifts 4.

Die Wirkungsweise der erfindungsgemäßen Heizeinrichtung wird anhand des Ausführungsbeispiels näher erläutert.

Zunächst wird die erste Kontaktplatte 5 auf die Haltestifte 4 aufgesteckt bis sie auf einer Anschlagsfläche am Sockel 9 zum Liegen kommt. Die erste Kontaktplatte 5 wird durch die Zentrierabschnitte 11 zentriert. Auf einen dafür vorgesehenen Bereich mittig auf der ersten Kontaktplatte 5 wird das Heizelement 7 platziert. Die Zentrierabschnitte 11, die durch die Durchbrüche 8 der ersten Kontaktplatte 5 ragen, zentrieren dabei auch das Heizelement 7.

Danach wird die zweite Kontaktplatte 6 auf die Haltestifte 4 gesteckt bis der Abschnitt 13 gerade und gleichmäßig am Heizelement 7 anliegt und ein entsprechender Kontaktdruck vorhanden ist. Beim Aufstecken verformen sich die Federnasen 14 jeweils entgegen der Aufsteckrichtung A und stützen sich am Haltestift 4 ab. Die Längen der Federabschnitte 14 sind ausreichend dafür bemessen und betragen etwa 1-2 Haltestiftdurchmesser D. Die Durchbrüche 12 der zweiten Kontaktplatte sind gerade so breit, dass sie die Haltestifte 4 aufnehmen können. Die Breite der Federabschnitte 14 beträgt demnach in etwa einen Haltestiftdurchmesser wobei seitlich etwas Spiel vorgesehen ist für thermische Verformungen der zweiten Kontaktplatte 6 in Relation zu den Haltestiften 4. In der Ansicht der Figur 4 zeigen der Durchbrüche 12 zweiten Kontaktplatte 6 in etwa ein H-förmiges Profil.

Zum Betrieb der Heizeinrichtung werden beide Kontaktplatten 5,6 jeweils mit Kontaktanschlüssen versehen. Über diese Kontaktanschlüsse (nicht gezeigt) wird die Heizeinrichtung an ein Stromnetz angeschlossen. Das Heizelement 7 wirkt dabei als Widerstand, der elektrischen Strom in Wärme umwandelt und diese Wärme über Wärmeleitung auf die Kontaktplatten 5,6 überträgt. Als Heizelement 7 ist ein sogenanntes PTC-Heizelement vorgesehen, das dem Fachmann gemeinhin bekannt ist. Die Funktionsweise desselben wird deshalb an dieser Stelle auch nur kurz beschrieben.

Ein starker Kontaktdruck zwischen den Kontaktplatten 5,6 und dem Heizelement 7 ist dabei vorteilhaft in Bezug auf die Leitung von Wärme und Strom. Geht der Kontaktdruck verloren so fließt kein Strom durch die Anordnung, das Heizelement 7 kann nicht heizen die Heizeinrichtung 1 verliert ihre primäre Funktion.

Im Betrieb einer derartigen Heizeinrichtung wird ein flüssiges oder gasförmiges Medium um die Kontaktplatten und das Heizelement gespült und dadurch aufgeheizt. Das PTC (Positive-Temperature-Coefficient)-Heizelement hat die Eigenschaft, dass dessen Widerstand bei einer bestimmten Temperatur sprunghaft ansteigt und sich die Maximaltemperatur im Gleichgewichtszustand deshalb auf einem bestimmten Wert einpendelt. Dieser maximale Temperaturwert kann durch die Materialeigenschaften des Heizelements bestimmt und gewählt werden.

Im Betrieb werden die beiden Kontaktplatten 5,6 erfindungsgemäß aufgeheizt. Das Material dieser Kontaktplatten 5,6 ist aus einem elektrisch und thermisch stark leitfähigem Material, vorzugsweise Aluminium, hergestellt. Dieses Material hat einen verhältnismäßig großen Wärmeausdehnungskoeffizienten in der Größenordnung von 23*10-6 m/(m*°C). Das Gehäuse besteht vorzugsweise aus Kunststoff, einem guten Isolator für Wärme und Strom und wird im Betrieb wenig bis gar nicht aufgeheizt. Je nach Betriebszustand treten große Temperaturgradienten zwischen den Kontaktplatten und dem Gehäuse auf, was wiederum thermoelastische Verformungen der Kontaktplatten 5,6 relativ zu den Haltestiften 4 und Spannungen in den Federzungen 14 erzeugt. Die Federabschnitte 14 sind jedoch so gestaltet, dass sie - unabhängig vom Betriebszustand - über den gesamten Betriebsbereich für einen ausreichenden Kontaktdruck zwischen den Kontaktplatten 5,6 und dem Heizelement 7 sorgen.

Die Heizeinrichtung 1 in dem gezeigten Prinzip ist vielseitig einsetzbar und eignet sich insbesondere für das Beheizen von Dieselkraftstoff in Dieselaggregaten oder Kurbelgehäusegasen in verschiedenen Arten von Wärmekraftmaschinen.

Für die Funktion der Heizeinrichtung sind Gestaltungsform, Anordnung und Anzahl der Kontaktplatten 5,6, der Heizelemente 7 und der Haltestifte 4 sowie die Form des Gehäuses 2 nicht entscheidend und können entsprechenden Bedürfnissen angepasst werden ohne den Schutzbereich der Erfindung zu verlassen.

## Patentansprüche

1. Heizeinrichtung (1) für ein gasförmiges oder flüssiges zu beheizendes Medium mit zwei in einem Gehäuse (2) angeordneten, der Wärmeübertragung dienenden Kontaktplatten (5,6) zwischen denen zumindest ein scheibenförmiges Heizelement (7) angeordnet und in Anlage an beide Kontaktplatten (5,6) gehalten ist, wobei die erste und die zweite Kontaktplatte (5,6) mit jeweils zumindest einem Durchbruch (8,12) versehen sind, und das Gehäuse (2) zumindest einen Haltestift (4) aufweist, der die Durchbrüche (8,12) der ersten und der zweiten Kontaktplatte (5,6) in einer Aufsteckrichtung (A) durchdringt, **gekennzeichnet dadurch, dass** die zweite Kontaktplatte (6) im Bereich des Durchbruchs (12) fest mit der zweiten Kontaktplatte (6) verbundene Federabschnitte (14) aufweist, die direkt aus dem Material der zweiten Kontaktplatte freigeschnittene Federzungen sind und die durch Montieren der zweiten Kontaktplatte (6) verformbar sind, wodurch sich die montierte zweite Kontaktplatte (6) entgegen der Aufsteckrichtung (A) an dem Haltestift (4) abstützt, um den Kontaktdruck zwischen dem Heizelement (7) und den Kontaktplatten (5,6) zu erzeugen.

2. Heizeinrichtung (1) nach Anspruch 1, **dadurch gekennzeichnet, dass** der Haltestift (4) aus weicherem Material gefertigt ist als der Federabschnitt (14).

3. Heizeinrichtung (1) nach einem der voranstehenden Ansprüche, **dadurch gekennzeichnet, dass** der Federabschnitt (14) mit zumindest einem Wiederhaken oder zumindest einer scharfkantigen Schneide (15) versehen ist und mit dem Haltestift (4) im Eingriff ist.

4. Heizeinrichtung (1) nach einem der voranstehenden Ansprüche, **dadurch gekennzeichnet, dass** im Bereich eines Durchbruchs (12) der zweiten Kontaktplatte (6) zumindest zwei Federzungen (14) angeordnet sind, wobei die Federzungen (14) vorzugsweise gleichmäßig um den Haltestift (4) verteilt sind.

5. Heizeinrichtung (1) nach einem der voranstehenden Ansprüche, **dadurch gekennzeichnet, dass** die zweite Kontaktplatte (6) in Aufsteckrichtung (A) zumindest einen aus der Plattenebene vorstehenden Abschnitt (13) aufweist, an dem das Heizelement (7) anliegt, wobei die Anlagefläche des vorstehenden Abschnitts (13) in etwa der Anlagefläche des Heizelements (7) entspricht.

6. Heizeinrichtung (1) nach einem der voranstehenden Ansprüche, **dadurch gekennzeichnet, dass** die Kontaktplatten (5, 6) im Wesentlichen kreis- bzw. ringförmig sind und im Wesentlichen parallel zueinander angeordnet sind.

7. Heizeinrichtung (1) nach einem der voranstehenden Ansprüche, **dadurch gekennzeichnet, dass** zumindest eine der Kontaktplatten (5,6) mit mehreren Durchbrüchen (8,12) versehen ist, wobei die Durchbrüche (8,12) im Wesentlichen in einer Kreisform (K) angeordnet sind.

8. Heizeinrichtung (1) nach einem der voranstehenden Ansprüche, **dadurch gekennzeichnet, dass** die Kontaktplatten (5, 6) im Wesentlichen rechteckförmig sind.

9. Heizeinrichtung (1) nach einem der voranstehenden Ansprüche, **dadurch gekennzeichnet, dass** beide Kontaktplatten (5,6) jeweils mit mehreren Durchbrüchen (8,12) versehen sind, die von jeweils einem Haltestift (4) durchdrungen werden, wobei die Durchbrüche (8,12) jeweils auf einem Kreis (K) um den Mittelpunkt der Anlagefläche des nächstgelegenen Heizelements (7) angeordnet sind.

10. Heizeinrichtung (1) nach einem der voranstehenden Ansprüche, **dadurch gekennzeichnet, dass** die Federabschnitte (14) am Durchbruch (12) der zweiten Kontaktplatte (6) im Wesentlichen tangential zu einem Kreis (K) um den Mittelpunkt der Auflagefläche des nächstgelegenen Heizelements (7) ausgerichtet sind.

11. Heizeinrichtung (1) nach einem der voranstehenden Ansprüche, **dadurch gekennzeichnet, dass** der Haltestift (4) dem Heizelement (7) benachbart angeordnet ist und das Heizelement (7) dadurch quer zur Aufsteckrichtung (A) fixiert.

12. Heizeinrichtung (1) nach einem der voranstehenden Ansprüche, **dadurch gekennzeichnet, dass** das Heizelement (7) mit zumindest einer Halteöffnung versehen ist, die der Haltestift (4) durchdringt.

13. Heizeinrichtung (1) nach einem der voranstehenden Ansprüche, **dadurch gekennzeichnet, dass** im Umfangsbereich des Heizelements (7) zumindest drei Haltestifte (4) vorgesehen sind, die vorzugsweise gleichmäßig entlang des Umfangs des Heizelements (7) angeordnet sind.

14. Heizeinrichtung (1) nach einem der voranstehenden Ansprüche, **dadurch gekennzeichnet, dass** das Gehäuse aus Kunststoff hergestellt ist.

15. Heizeinrichtung (1) nach einem der voranstehenden Ansprüche, **dadurch gekennzeichnet, dass** der Haltestift (4) im Wesentlichen zylindrisch ist und dessen Durchmesser (D) in etwa die zweifache Dicke des Heizelements (7) beträgt.

16. Heizeinrichtung (1) nach einem der voranstehenden Ansprüche, **dadurch gekennzeichnet, dass** die Breite der Federabschnitte (14) vorzugsweise dem Durchmesser (D) des Haltestifts entspricht.

17. Heizeinrichtung (1) nach einem der voranstehenden Ansprüche, **dadurch gekennzeichnet, dass** die freigeschnittene Länge der Federabschnitte (14) bevorzugt das Ein- bis Zweifache, vorzugsweise das Eineinhalbfache des Haltestiftdurchmessers (D) beträgt.

18. Heizeinrichtung (1) nach einem der voranstehenden Ansprüche, **dadurch gekennzeichnet, dass** die Durchbrüche (12) der zweiten Kontaktplatte (6) im Wesentlichen ein H-Profil aufweisen.

19. Heizeinrichtung (1) nach einem der voranstehenden Ansprüche, **dadurch gekennzeichnet, dass** die Haltestifte (4) auf zylindrischen Sockeln (9) sitzen, die bevorzugt den zwei- bis dreifachen Haltestiftdurchmesser (D) aufweisen.

20. Heizeinrichtung (1) nach einem der voranstehenden Ansprüche, **dadurch gekennzeichnet, dass** an den Haltestiften (4) Abschnitte (11) vorgesehen sind, die sowohl die erste Kontaktplatte (5) als auch das Heizelement (7) ausrichten.

21. Heizeinrichtung (1) nach einem der voranstehenden Ansprüche, **dadurch gekennzeichnet, dass** die Federabschnitte (14) an dem zum Abstützen am Haltestift (4) vorgesehenen Ende eine Kontur aufweisen, die im Wesentlichen der Kontur des Haltestifts (4) an der Abstützfläche entspricht.

## Claims

1. Heating device (1) for a gaseous or liquid medium to be heated having two contact plates (5, 6) for heat transfer disposed in a housing (2), between which at least one disc-shaped heating element (7) is disposed and is held in contact with both contact plates (5, 6), wherein the first and second contact plates (5, 6) are provided with at least one respective perforation (8, 12), and the housing (2) has at least one holding pin (4) which penetrates the perforations (8, 12) of the first and second contact plates (5, 6) in a mounting direction (A), **characterised in that** the second contact plate (6) has resilient sections (14) which are connected rigidly to the second contact plate (6) in the region of the perforation (12), which are spring tongues cut free directly from the material of the second contact plate, and which are deformable by mounting of the second contact plate (6), whereby the mounted second contact plate (6) bears on the holding pin (4) against the mounting direction (A) in order to generate the contact pressure between the heating element (7) and the contact plates (5, 6).

2. Heating device (1) according to Claim 1, **characterised in that** the holding pin (4) is manufactured from softer material than the resilient section (14).

3. Heating device (1) according to one of the preceding claims, **characterised in that** the resilient section (14) is provided with at least one barb or at least one sharp-edged blade (15) and is in engagement with the holding pin (4).

4. Heating device (1) according to one of the preceding claims, **characterised in that** in the region of a perforation (12) of the second contact plate (6) at least two spring tongues (14) are disposed, in which case the spring tongues (14) are distributed preferably evenly around the holding pin (4).

5. Heating device (1) according to one of the preceding claims, **characterised in that** the second contact plate (6) has at least one section (13) projecting from the plate plane in the mounting direction (A), which section the heating element (7) abuts, in which case the contact area of the projecting section (13) roughly corresponds to the contact area of the heating element (7).

6. Heating device (1) according to one of the preceding claims, **characterised in that** the contact plates (5, 6) are shaped substantially circularly or annularly and are arranged substantially parallel to one another.

7. Heating device (1) according to one of the preceding claims, **characterised in that** at least one of the contact plates (5, 6) is provided with plural perforations (8, 12), in which case the perforations (8, 12) are arranged substantially in a circular shape (K).

8. Heating device (1) according to one of the preceding claims, **characterised in that** the contact plates (5, 6) are substantially rectangular.

9. Heating device (1) according to one of the preceding claims, **characterised in that** both contact plates (5, 6) are each provided with plural perforations (8, 12) which are penetrated respectively by a holding pin (4), in which case the perforations (8, 12) are respectively arranged in a circle (K) around the centre point of the contact area of the proximal heating element (7).

10. Heating device (1) according to one of the preceding claims, **characterised in that** the resilient sections (14) on the perforation (12) of the second contact plate (6) are oriented substantially tangential to a circle (K) around the centre point of the bearing face of the proximal heating element (7).

11. Heating device (1) according to one of the preceding claims, **characterised in that** the holding pin (4) is disposed adjacent to the heating element (7) and thus fixes the heating element (7) transverse to the mounting direction (A).

12. Heating device (1) according to one of the preceding claims, **characterised in that** the heating element (7) is provided with at least one holding aperture which the holding pin (4) penetrates.

13. Heating device (1) according to one of the preceding claims, **characterised in that** in the circumferential region of the heating element (7) at least three holding pins (4) are provided which are arranged preferably evenly along the circumference of the heating element (7).

14. Heating device (1) according to one of the preceding claims, **characterised in that** the housing is manufactured from plastics material.

15. Heating device (1) according to one of the preceding claims, **characterised in that** the holding pin (4) is substantially cylindrical and its diameter (D) is equal to roughly twice the thickness of the heating element (7).

16. Heating device (1) according to one of the preceding claims, **characterised in that** the width of the resilient sections (14) preferably corresponds to the diameter (D) of the holding pin.

17. Heating device (1) according to one of the preceding claims, **characterised in that** the freely cut length of the resilient sections (14) is preferably once to twice, preferably one-and-a-half times the size of the holding pin diameter (D).

18. Heating device (1) according to one of the preceding claims, **characterised in that** the perforations (12) of the second contact plate (6) substantially have an H-profile.

19. Heating device (1) according to one of the preceding claims, **characterised in that** the holding pins (4) rest on cylindrical bases (9) which are preferably two to three times the size of the holding pin diameter (D).

20. Heating device (1) according to one of the preceding claims, **characterised in that** on the holding pins (4) sections (11) are provided which orient both the first contact plate (5) and the heating element (7).

21. Heating device (1) according to one of the preceding claims, **characterised in that** the resilient sections (14) have on the end provided for supporting on the holding pin (4) a contour which substantially corresponds to the contour of the holding pin (4) on the support face.

## Revendications

1. Dispositif de chauffage (1) pour un fluide gazeux ou liquide à chauffer, comportant deux plaques de contact (5, 6), qui sont agencées dans un boîtier (2) et sont destinées à transmettre la chaleur et entre lesquelles est agencé au moins un élément chauffant (7) en forme de disque et est maintenu en appui contre les deux plaques de contact (5, 6), la première et la deuxième plaque de contact (5, 6) comportant chacune au moins un trou débouchant (8, 12), et le boîtier (2) comporte au moins un ergot de fixation (4) qui passe à travers les trous débouchants (8, 12) de la première et de la deuxième plaque de contact (5, 6) dans une direction d'enfichage (A), **caractérisé en ce que** la deuxième plaque de contact (6), dans la zone du trou débouchant (12), comporte des parties élastiques (14), qui sont assemblées de manière fixe à la deuxième plaque de contact (6), qui sont des languettes de ressort dégagées directement dans le matériau de la deuxième plaque de contact et qui peuvent être déformées par le montage de la deuxième plaque de contact (6), moyennant quoi la deuxième plaque de contact (6) montée prend appui sur l'ergot de fixation (4) dans le sens opposé à la direction d'enfichage (A), afin de générer la pression de contact entre l'élément chauffant (7) et les plaques de contact (5, 6).

2. Dispositif de chauffage (1) selon l'une des revendications précédentes, **caractérisé en ce que** l'ergot de fixation (4) est réalisé dans un matériau plus souple que la partie élastique (14).

3. Dispositif de chauffage (1) selon l'une des revendications précédentes, **caractérisé en ce que** la partie élastique (14) est munie d'au moins un ardillon ou d'au moins une lame (15) à arête vive et est en prise avec l'ergot de fixation (4).

4. Dispositif de chauffage (1) selon l'une des revendications précédentes, **caractérisé en ce que** dans la zone d'un trou débouchant (12) de la deuxième plaque de contact (6) sont agencées au moins deux languettes de ressort (14), les languettes de ressort (14) étant réparties de préférence uniformément autour de l'ergot de fixation (4).

5. Dispositif de chauffage (1) selon l'une des revendications précédentes, **caractérisé en ce que** la deuxième plaque de contact (6) dans la direction d'enfichage (A) comporte au moins une partie (13) en saillie sur le plan de la plaque, sur laquelle l'élément chauffant (7) est en appui, la surface d'appui de la partie (13) saillante correspondant sensiblement à la surface d'appui de l'élément chauffant (7).

6. Dispositif de chauffage (1) selon l'une des revendications précédentes, **caractérisé en ce que** les plaques de contact (5, 6) ont sensiblement une forme circulaire ou annulaire et sont agencées sensiblement parallèlement l'une à l'autre.

7. Dispositif de chauffage (1) selon l'une des revendications précédentes, **caractérisé en ce qu'**au moins une des plaques de contact (5, 6) comporte plusieurs trous débouchants (8, 12), les trous débouchants (8, 12) étant agencés sensiblement en forme de cercle (K).

8. Dispositif de chauffage (1) selon l'une des revendications précédentes, **caractérisé en ce que** les plaques de contact (5, 6) sont sensiblement rectangulaires.

9. Dispositif de chauffage (1) selon l'une des revendications précédentes, **caractérisé en ce que** les deux plaques de contact (5, 6) comportent chacune plusieurs trous débouchants (8, 12), à travers lesquels passe respectivement un ergot de fixation (4), les trous débouchants (8, 12) étant agencés respectivement sur un cercle (K) autour du centre de la surface d'appui de l'élément chauffant (7) le plus proche.

10. Dispositif de chauffage (1) selon l'une des revendications précédentes, **caractérisé en ce que** les parties élastiques (14), au niveau du trou débouchant (12) de la deuxième plaque de contact (6), sont orientées sensiblement tangentiellement à un cercle (K) autour du centre de la surface d'appui de l'élément chauffant (7) le plus proche.

11. Dispositif de chauffage (1) selon l'une des revendications précédentes, **caractérisé en ce que** l'ergot de fixation (4) est agencé à proximité de l'élément chauffant (7) et, de ce fait, immobilise l'élément chauffant (7) transversalement à la direction d'enfichage (A).

12. Dispositif de chauffage (1) selon l'une des revendications précédentes, **caractérisé en ce que** l'élément chauffant (7) comporte au moins un orifice de fixation, à travers lequel passe l'ergot de fixation (4).

13. Dispositif de chauffage (1) selon l'une des revendications précédentes, **caractérisé en ce que** dans la zone périphérique de l'élément chauffant (7) sont prévus au moins trois ergots de fixation (4), qui sont de préférence uniformément répartis le long de la périphérie de l'élément chauffant (7).

14. Dispositif de chauffage (1) selon l'une des revendications précédentes, **caractérisé en ce que** le boîtier est réalisé en matière plastique.

15. Dispositif de chauffage (1) selon l'une des revendications précédentes, **caractérisé en ce que** l'ergot de fixation (4) est sensiblement cylindrique et son diamètre (D) correspond à peu près au double de l'épaisseur de l'élément chauffant (7).

16. Dispositif de chauffage (1) selon l'une des revendications précédentes, **caractérisé en ce que** la largeur des parties élastiques (14) correspond, de préférence, au diamètre (D) de l'ergot de fixation.

17. Dispositif de chauffage (1) selon l'une des revendications précédentes, **caractérisé en ce que** la longueur libre des parties élastiques (14) est de préférence égale à une à deux fois, de préférence une fois et demie le diamètre (D) de l'ergot de fixation.

18. Dispositif de chauffage (1) selon l'une des revendications précédentes, **caractérisé en ce que** les trous débouchants (12) de la deuxième plaque de contact (6) ont sensiblement un profil en H.

19. Dispositif de chauffage (1) selon l'une des revendications précédentes, **caractérisé en ce que** les ergots de fixation (4) reposent sur des socles (9) cylindriques, qui ont de préférence deux à trois fois le diamètre (D) des ergots de fixation.

20. Dispositif de chauffage (1) selon l'une des revendications précédentes, **caractérisé en ce que** sur les ergots de fixation (4) sont prévues des parties (11), qui orientent la première plaque de contact (5), de même que l'élément chauffant (7).

21. Dispositif de chauffage (1) selon l'une des revendications précédentes, **caractérisé en ce que** les parties élastiques (14), au niveau des extrémités prévues pour prendre appui contre l'ergot de fixation (4), ont un contour qui correspond sensiblement au contour de l'ergot de fixation (4) sur la surface d'appui.
